Europäisches Patentamt

European Patent Office

Office européen des brevets

(11) Veröffentlichungsnummer: **0 462 278 A1**

# (12) EUROPÄISCHE PATENTANMELDUNG
## veröffentlicht nach Art. 158 Abs. 3
## EPÜ

(21) Anmeldenummer: 90913573.3

(22) Anmeldetag: 05.01.90

(86) Internationale Anmeldenummer:
**PCT/SU90/00003**

(87) Internationale Veröffentlichungsnummer:
**WO 91/10126 (11.07.91 91/15)**

(51) Int. Cl.5: **G01N 21/53, G01J 1/44**

(43) Veröffentlichungstag der Anmeldung:
**27.12.91 Patentblatt 91/52**

(84) Benannte Vertragsstaaten:
**BE DE FR IT SE**

(71) Anmelder: **SREDNEAZIATSKY NAUCHNO-ISSLEDOVATELSKY I PROEKTNY INSTITUT TSVETNOI METTALLURGII**
**ul. Pushkina, 59**
**Tashkent, 700000(SU)**

(72) Erfinder: **MARTYNOV, Nikolai Vasilievich**
**massiv Junus-abad kvartal 18, 16-95**
**Tashkent, 700114(SU)**
Erfinder: **FAZYLOV, Rakhmatullo**
**pl. Kh. Alimdzhana, 12a-44**
**Tashkent, 700000(SU)**

(74) Vertreter: **Patentanwälte Zellentin & Partner**
**Zweibrückenstrasse 15**
**W-8000 München 2(DE)**

(54) **VORRICHTUNG ZUM MESSEN DER OPTISCHEN DICHTE VON GASEN.**

(57) Die Erfindung bezieht sich auf das Gebiet der Kontrolle von Stoffen mit optischen Verfahren.

Die Einrichtung enthält ein Gehäuse (1), in dem auf einer optischen Achse (2) ein Lichtstrahler (3), eine Messkammer (5) und ein Fotoempfänger (6) angeordnet sind. An den Ausgang des Fotoempfängers (6) sind eine Hintereinanderschaltung eines Verstärkers (7), eines logarithmischen Umwandlers (9), der einen zweiten Eingang (10) aufweist, eine Registriereinheit (16), die mit dem Ausgang des logarithmischen Umwandlers (9) elektrisch verbunden ist, sowie eine Bezugsspannungsquelle (15) angeschlossen. Erfindungsgemäss enthält die Einrichtung eine Reihenschaltung aus einem Integrator (11), einem Summator (13), einem Schalter (17) und einem Inversintegrator (18), dessen Ausgang an den zweiten Eingang (10) des logarithmischen Umwandlers (9) angeschlossen ist. Die Registriereinheit (16) ist mit dem Ausgang des Summators (13) verbunden.

FIG. 1

Die vorliegende Erfindung betrifft die Kontrolle von Stoffen mit optischen Verfahren, insbesondere eine Einrichtung zur Messung der optischen Dichte von Gasen.

Stand der Technik

Es ist eine Einrichtung zur Messung der optischen Dichte von Gasen (UdSSR, "Tragbares Messgerät zur Messung der Undurchsichtigkeit der Abgase von Fahrzeugen INA- I09", Kennkarte 2.850.260 PS) bekannt, die ein Gehäuse enthält, in dem auf einer optischen, quer zur Bewegungsrichtung der Gase liegenden Achse ein Lichtstrahler, eine für den Ein- und Austritt der zu analysierenden Gase vorgerichtete Messkammer, die durch die Innenwände des Gehäuses gebildet ist, und ein Fotoempfänger angeordnet sind. An den Ausgang des Fotoempfängers ist eine Reihenschaltung eines Verstärkers, eines logarithmischen Umwandlers, der einen Analog-Digital-Umsetzer, ein peripheres Paralleladapter und einen Zentralprozessor enthält, angeschlossen. Ausserdem ist die Einrichtung mit einer Bezugsspannungsquelle, die über ein Potentiometer an den zweiten Eingang des logarithmischen Umwandlers, nämlich an den Eingang des Analog-Digital-Umsetzers angeschlossen ist, einer Registriereinheit, die mit dem Ausgang des logarithmischen Umwandlers in elektrischer Verbindung steht, und einem Kontroll-Lichtfilter zur Einstellung der Nennempfindlichkeit versehen.

Die genannte Einrichtung funktioniert folgenderweise. Vor Beginn der Messungen nimmt man die Einstellung des Nullpegels vor. Der Nullpegel wird durch Bildung einer Kompensationsspannung am Eingang der Registriereinheit mit Hilfe des Potentiometers in strenger Übereinstimmung mit dem unabsorbierten Lichtstrom eingestellt, der vom Fotoempfänger wahrgenommen und in ein entsprechendes elektrisches Signal umgewandelt wird. Dabei wird am Eingang der Registriereinheit der Nullpegel eingestellt, d.h. auf dem Bildschirmgerät der Registriereinheit wird der Nullwert abgebildet.

Alsdann wird in die Mess-Durchströmkammer ein zu analysierendes Gas geleitet, das in seiner Zusammensetzung undurchsichtige und flüssige Aerosolteilchen enthält. Der Lichtstrom vom Lichtstrahler durchquert die Messkammer und trifft auf die aktive Oberfläche des Fotoempfängers auf. Der Fotoempfänger verwandelt den Lichtstrom geringerer Intensität in ein elektrisches Signal geringerer Amplitude. Das vom Verstärker verstärkte Signal geringerer Amplitude gelangt zum Eingang des logarithmischen Umwandlers, worauf am Eingang der Registriereinheit ein Signal erscheint, dessen Wert auf dem Bildschirm der Registriereinheit dargestellt wird.

Nach der Durchführung einer Serie der Messungen der optischen Dichte geschieht an den aktiven Oberflächen der optischen Elemente ein teilweises Abscheiden von undurchsichtigen Bestandteilen des zu analysierenden Gases. Dadurch trifft bei Abwesenheit der zu analysierenden Gase in der Messkammer auf den Fotoempfänger ein Lichtstrom geringerer Intensität auf, was die Verschiebung des Nullpegels um einen Betrag hervorruft, welcher der Verminderung der Intensität des ursprünglichen Lichtstroms entspricht.

Zur Wiederherstellung der Ausgangsparameter in der Schaltung der Einrichtung nimmt man eine Regelung der Kompensationsspannung am Eingang der Registriereinheit mit Hilfe des Potentiometers vor. Dann bringt man in den Weg des Lichtstroms das Kontroll-Lichtfilter und stellt mit einem Empfindlichkeitsregelungsorgan, das in der Bauart der in Rede stehenden Einrichtung vorgesehen ist, einen Nennwert der Empfindlichkeit ein. Der Nullpegel wird von Hand eingestellt. Dabei liegt ein Fehler wegen ungenauer Einstellung des Nullpegels infolge der begrenzten Auflösung des Einstellorgans und wegen begrenzter Möglichkeiten zur Darstellung geringer Verschiebungen des Nullpegels auf dem digitalen Bildschirmgerät vor.

Offenbarung der Erfindung

Der vorliegenden Erfindung liegt die Aufgabe zugrunde, eine Einrichtung zur Messung der optischen Dichte von Gasen zu schaffen, deren Aufbau solche Bauelemente mit gegenseitigen Verbindungen enthält, welche die Möglichkeit bieten, die Einstellung und die anschliessende Korrektur des Nullpegels automatisch vorzunehmen, wodurch die Messgenauigkeit erhöht wird.

Die gestellte Aufgabe wird dadurch gelöst, dass in der Einrichtung zur Messung der optischen Dichte von Gasen, die ein Gehäuse enthält, in dem auf einer optischen Achse ein Lichtstrahler, eine für das Durchströmen zu analysierender Gase vorgerichtete Messkammer und ein Fotoempfänger hintereinander angeordnet sind, an dessen Ausgang eine Reihenschaltung eines Verstärkers und eines logarithmischen Umwandlers, der einen zweiten Eingang aufweist, eine Registriereinheit, die mit dem Ausgang des logarithmischen Umwandlers elektrisch verbunden ist, sowie eine Bezugsspannungsquelle gelegt ist gemäss der Erfindung zusätzlich eine Hintereinanderschaltung aus einem Integrator, einem Summator, an dessen zweiten Eingang die Bezugsspannungsquelle angeschlossen ist, aus einem Schalter und einem Inversintegrator, dessen Ausgang am zweiten Eingang des logarithmischen Umwandlers liegt, vorgesehen ist, wobei der Eingang des Integrators an den Ausgang des logarithmischen Umwandlers angeschlossen ist und die Registriereinheit mit dem Ausgang des Summators in Verbindung steht.

Um Fehler zu vermeiden, die durch die Wärmeausdehnung des zu analysierenden Gases bedingt sind, ist es vorteilhaft, die Einrichtung mit einem Wärmefühler, der in der Messkammer untergebracht ist, einem weiteren Verstärker und einem Umschalter zusätzlich zu versehen, wobei der letztere über zwei Eingänge- einen Steuer- und einen Informationseingang- verfügt, der Ausgang des Wärmefühlers über den Verstärker an den Informationseingang des Umschalters angeschlossen ist, der zwischen dem logarithmischen Umwandler und dem Integrator so geschaltet ist, dass der Steuereingang des Umschalters mit dem Ausgang des logarithmischen Umwandlers und der Ausgang des Umschalters mit dem Eingang des Integrators verbunden ist.

In der erfindungsgemässen Einrichtung wird durch die Reihenschaltung des Integrators, des Summators sowie durch einen von dem Schalter und dem Inversintegrator gebildeten Gegenkopplungskreis die Einstellung des Nullpegels zu Beginn der Arbeit der Einrichtung und die anschliessende Korrektur des Nullpegels nach der Durchführung einer Serie von Messungen automatisiert, wodurch die Messgenauigkeit erhöht wird.

Kurze Beschreibung der Zeichnungen

Im folgenden wird die Erfindung an Hand von das Wesen der Erfindung nicht begrenzenden Ausführungsformen unter Bezugnahme auf Zeichnungen näher erläutert. Es zeigt:

Fig. 1 ein Strukturschaltbild der erfindungsgemässen Einrichtung zur Messung der optischen Dichte von Gasen;

Fig. 2 ein Prinzipschaltbild eines logarithmischen Umwandlers, der zur in Fig. 1 gezeigten Einrichtung gehört;

Fig. 3 ein Strukturschaltbild der erfindungsgemässen Einrichtung mit einem Wärmefühler in der Messkammer;

Fig. 4a,b,c,d,e Signalverläufe in verschiedenen Punkten des Strukturschaltbildes der erfindungsgemässen Einrichtung, wobei auf der Abszissenachse Werte der laufenden Zeit t und auf der Ordinatenachse Spannungsamplituden U abgetragen sind;

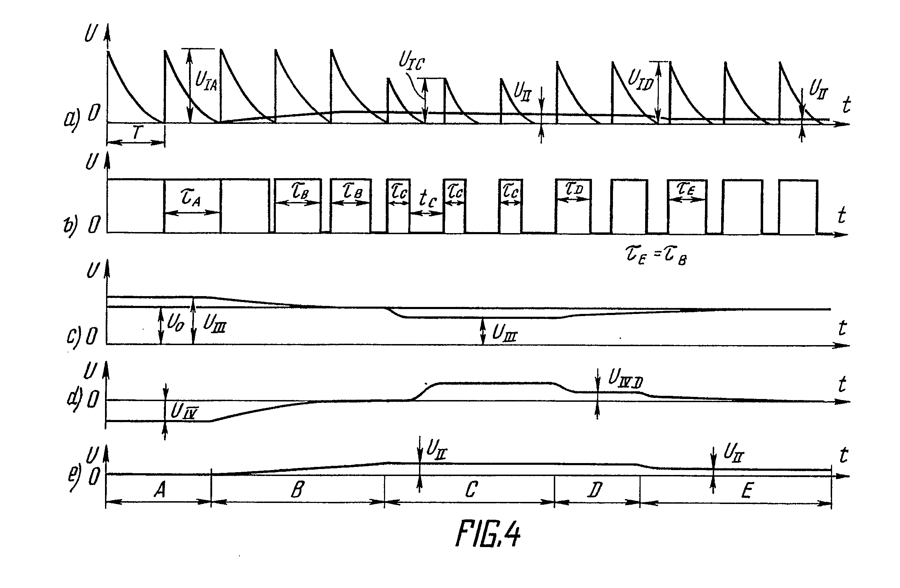

Fig. 4a insbesondere einen Spannungsverlauf am nichtinvertierenden (direkten) Eingang des Komparators;

Fig. 4b einen Spannungsverlauf am Ausgang des logarithmischen Umwandlers;

Fig. 4c einen Spannungsverlauf am ersten und zweiten Eingang des Summators;

Fig. 4d einen Spannungsverlauf am Ausgang des Summators;

Fig. 4e einen Spannungsverlauf am Ausgang des Inversintegrators.

Ausführungsform der Erfindung

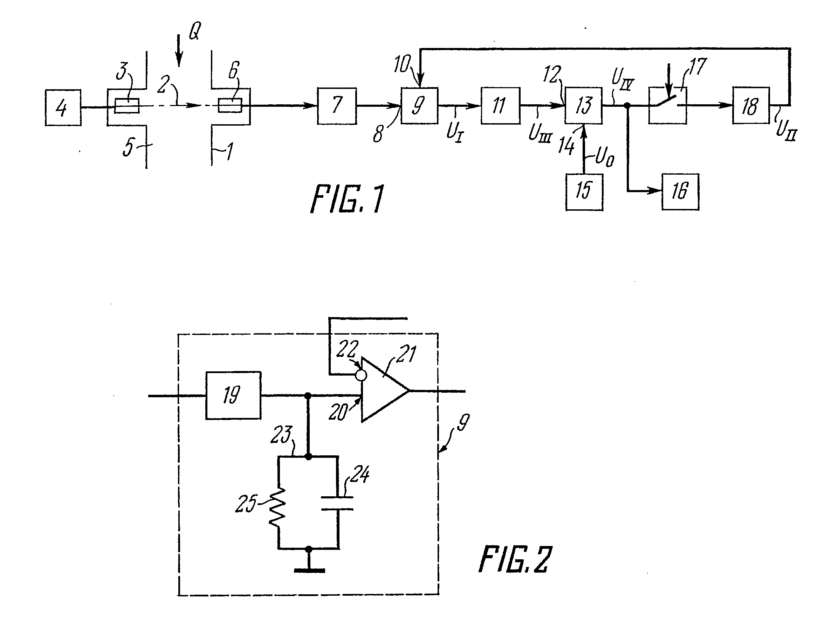

Die Einrichtung zur Messung der optischen Dichte von Gasen nach Fig. 1 enthält ein Gehäuse 1, in dem auf einer optischen Achse 2 ein Lichtstrahler 3, z.B. eine Leuchtdiode, an dessen Eingang bei der vorliegenden Ausführungsform ein Impulsgenerator 4 angeschlossen ist, eine durch die Innenwände des Gehäuses 1 begrenzte Messkammer 5 und ein Fotoempfänger 6 hintereinander angeordnet sind. Die Messkammer 5 ist mit Öffnungen zum Ein- und Austritt des Stroms Q eines zu analysierenden Gases ausgestattet. An den Ausgang des Fotoempfängers 6 ist ein Verstärker 7 in Reihe geschaltet, dessen Ausgang mit dem nichtinvertierenden (direkten) Eingang 8 eines logarithmischen Differentialumwandlers 9 in Verbindung steht, der einen zweiten invertierenden (inversen) Eingang 10 aufweist. Der Ausgang des logarithmischen Differentialumwandlers 9 liegt am Eingang des Integrators 11, dessen Ausgang mit dem invertierenden Eingang 12 eines Summators 13 in Verbindung steht. An den nichtinvertierenden Eingang 14 des Summators 13 ist eine Bezugsspannungsquelle 15 gelegt. An den Ausgang des Summators 13 sind eine Registriereinheit 16 und ein Schalter 17 angeschlossen. Am Ausgang des Schalters 17 liegt der Eingang eines Inversintegrators 18, dessen Ausgang seinerseits an den invertierenden Eingang 10 des logarithmischen Umwandlers 9 angeschlossen ist, d.h. der Zweig, bestehend aus dem Schalter 17 und dem Inversintegrators 18, bildet einen Gegenkopplungskreis.

Wie schon oben erwähnt, ist bei der hier betrachteten Ausführungsform der erfindungsgemässen Einrichtung der Eingang 8 des Umwandlers 9 nichtinvertierend, der Eingang 10 aber invertierend. Der Eingang 12 des Summators ist invertierend und der Eingang 14 nichtinvertierend. Jedoch können die Eingänge 8, 14 als invertierende Eingänge ausgeführt werden. In diesem Fall sind die Eingänge 10,12 nichtinvertierend auszuführen.

Der logarithmische Umwandler 9 (Fig. 2) besteht aus einem Schalter 19, z.B. einer Diode, die einen geringen Durchlasswiderstand und einen hohen Sperrwiderstand besitzt, und einem Spannungskomparator 21, der in Reihe mit seinem nichtinvertierenden Eingang 20 an den Ausgang des Schalters 19 geschaltet ist. Am invertierenden Eingang 22 des Komparators 21 liegt der Ausgang des Inversintegrators 18 (Fig. 1). Zwischen dem Verbindungspunkt des Eingangs 20 (Fig. 2) des Komparators 21 und des Ausgangs des Schalters 19 und der Nullpotentialschiene ist ein paralleler RC-Kreis 23 geschaltet, der aus einem Kondensator 24 und einem Widerstand 25 besteht.

Als Integrator 11 kann ein Tiefpassfilter zweiter Ordnung verwendet werden, während als Inversintegrator 18 ein Operationsverstärker in inverser Schaltung mit einem Kondensator im Gegenkopplungskreis eingesetzt werden kann.

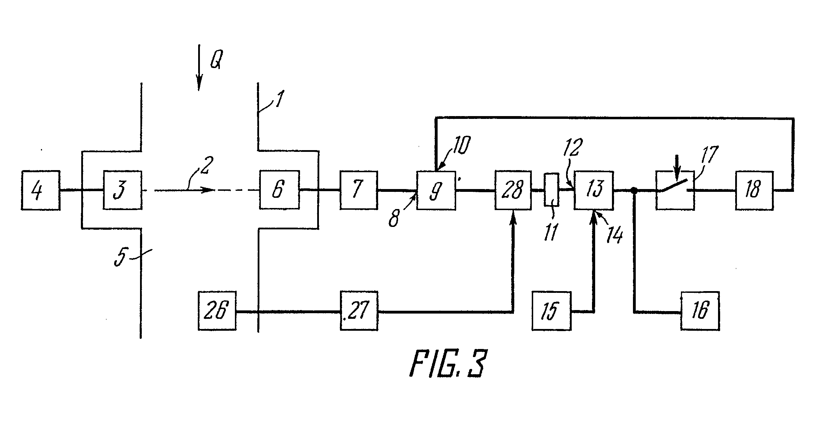

Bei der in Fig. 3 dargestellten Ausführungsform der erfindungsgemässen Einrichtung ist zum Unterschied von der in Fig. 1, 2 gezeigten Ausführungsform in der Mess-Durchströmkammer ein Wärmefühler 26 untergebracht, an dessen Ausgang ein Reihenkreis aus einem zusätzlichen Verstärker 27 und einem Umschalter 28, der zwischen dem Ausgang des logarithmischen Umwandlers 9 und dem Eingang des Integrators 11 geschaltet ist, angeschlossen. Dabei steht der Steuereingang des Umschalters 28 mit dem Ausgang des logarithmischen Umwandlers 9 in Verbindung, während der zweite Informationseingang des Umschalters 28 über den zusätzlichen Verstärker 27 an den Wärmefühler 26 angeschlossen ist.

Bei dieser Ausführungsform der erfindungsgemässen Einrichtung ist der Umschalter 28 als elektronischer Schalter ausgebildet, der einen Steuer- und einen Informationseingang hat. An den Informationseingang des Umschalters 28 ist über den Verstärker 27 der Ausgang des Wärmefühlers 26 angeschlossen. An den Steuereingang des Umschalters 28 gelangt ein Signal vom Ausgang des Fotoempfängers 6, das vom Verstärker 7 verstärkt und vom logarithmischen Umwandler 9 in eine Impulsfolge umgewandelt worden ist. Die Amplitude des Signals, das am Ausgang des elektronischen Schalters gebildet wird, richtet sich nach der Amplitude des am Informationseingang des elektronischen Schalters eintreffenden Signals, während die Impulsdauer des Signals an dessen Ausgang durch die Impulsdauer des am Steuereingang des elektronischen Schalters ankommenden Signals bestimmt wird. Die schaltungstechnische Lösung des elektronischen Schalters ist weit bekannt (S. z.B. U.Tittse, K.Shenk "Halbleiter-Schaltungstechnik", 1982, Verlag "Mir", Moskau, S. 276 bis 277).

Die in Fig. 1, 2 gezeigte Einrichtung zur Messung der optischen Dichte von Gasen arbeitet wie folgt.

Im Ausgangszustand ist der Schalter 17 getrennt, d.h. der Gegenkopplungskreis ist ebenfalls getrennt. Vor Beginn der Arbeit führt man die Einstellung des Nullpegels der Einrichtung durch. In der Messkammer 5 gibt es dabei kein zu analysierendes Gas. Man schaltet den Lichtstrahler 3 ein. Der Impulsgenerator 4 sorgt für die Funktion des Strahlers 3 bei der Erzeugung von kurzen Lichtimpulsen mit einer Periode T. In den Zeitpunkten, in denen diese Impulse wirksam sind, durchquert ein Lichtstrom die Messkammer 5, trifft auf die aktive Oberfläche des Fotoempfängers 6 auf und wird durch letzteren in ein entsprechendes elektrisches Signal umgewandelt, das vom Verstärker 7 verstärkt wird. Alsdann gelangt das Signal zum nichtinvertierenden Eingang 8 des logarithmischen Umwandlers 9. Durch den elektronischen Schalter 19 (Fig. 2) wird für eine kurze Zeit der Ausgang des Verstärkers 7 an den RC-Kreis 23 angeschlossen, wobei der Kondensator 24 auf eine Amplitude geladen wird, die der Spannung $U_{IA}$ des verstärkten Signals am Ausgang des Fotoempfängers 6 entspricht.

Während der Pausen zwischen den Lichtimpulsen, deren Pausenzeit gleich T ist, fällt die Spannung $U_{IA}$ am Kondensator 24 exponentiell infolge des Entladens des Kondensators 24 über den Widerstand 25 des RC-Kreises 23 ab. Die Entladezeit $\tau_A$ (Fig. 4a, Abschnitt A) ist der Impulsfolgeperiode T gleich.

Am Ausgang des Integrators 18 fehlt die Spannung $U_{II}$ im gegebenen Zeitmoment. Am Eingang 12 des Summators 13 liegt die Spannung $U_{III}$ (Fig. 4c, Abschnitt A) an, die vom Integrator II eingetroffen ist, während am Eingang 14 die Spannung $U_0$ von der Bezugsspannungsquelle 15 anliegt. Am Ausgang des Summators steht eine Spannung $U_{IV}$ (Fig. 4d, Abschnitt A) an, die sich ergibt zu $U_{IV} = U_0 - U_{III}$.

Zur Einstellung des Nullpegels der Einrichtung schliesst man den Schalter 17 des Gegenkopplungskreises. Bei erfolgtem Schliessen des Schalters 17 wird dem Eingang des Inversintegrators 18 eine negative Spannung $U_{IV}$ (Fig. 4d, Abschnitt B) zugeführt, die am Ausgang des Summators 13 anliegt, wodurch am Ausgang des Inversintegrators 18 eine ansteigende Spannung $U_{II}$ (Fig. 4e, Abschnitt B) positiver Polarität gebildet wird. Die Spannung $U_{II}$ trifft am Eingang 22 (Fig. 2) des Komparators 21 des logarithmischen Umwandlers 9 ein, wo sie durch den Komparator 21 mit der Spannung $U_{IA}$ der exponentialen Impulsfolge, welche dem Eingang 20 zugeführt wird, verglichen wird. Durch Vergleich der zwei Spannungen $U_{IA}$ und $U_{II}$ wird am Ausgang des Komparators 21 (Fig. 4b, Abschnitt B) eine Impulsfolge mit einer Folgefrequenz gebildet, die der Impulsfolgefrequenz des Impulsgenerators 4 gleich ist. Hierbei wird die Dauer $\tau_B$ der Impulse am Ausgang des Komparators 21 mit steigender Spannung $U_{II}$ am Ausgang des Inversintegrators 18 (Fig. 1) oder am Eingang 22 des Komparators 21 (Fig. 2) vermindert.

Nach Ablauf einer bestimmten Zeit, da $U_{II}$ = const ist, wird die Dauer $\tau_B$ der Impulse am Ausgang des Komparators 21 stabilisiert, wobei das am Integrator 11 (Fig. 1) integrierte und am invertierenden Eingang 12 des Summators 13 eingetroffene Signal die Bezugsspannung $U_0$ kompensiert, die dem nichtinvertierenden Eingang 14 des Summators 13 zugeführt wird. Dabei wird am Ausgang des Summators 13 das Nullpotential ($U_{IV}$ = 0) eingestellt, das über den geschlossenen Schalter 17 dem Eingang des Inversintegrators 18 zugeleitet wird. Das heisst, am Ausgang des Inversintegrators 18 hört die Änderung der Spannung $U_{II}$ auf. In der Schaltung der Einrichtung wird das Gleichgewicht eingestellt.

Alsdann trennt man den Schalter 17, während das erreichte Gleichgewicht der Schaltung der Einrichtung durch die Speicherung des Korrektursignals $U_{II}$ am Speicherkondensator im Gegenkopplungskreis des Inversintegrators 18 erhalten bleibt, d.h. am Ausgang des Summators 13 bleibt das Nullpotential ($U_{IV} = 0$) erhalten, und die Registriereinheit 16 bildet den Nullpegel des Signals ab.

Danach bringt man die Einrichtung zur Messung der optischen Dichte von Gasen in den Strom Q eines zu analysierenden Gases (Fig. 1) so ein, dass die Messkammer 5 mit einem rauchigen Gas gefüllt wird, das undurchsichtige Aerosolteilchen von Staub und Russ enthält. Die Intensität des Lichtstroms des Lichtstrahlers 3 wird dadurch geschwächt, dass dieser Strom durch die undurchsichtigen Teilchen absorbiert wird, so dass vom Fotoempfänger 6 der Lichtstrom mit geringerer Intensität aufgenommen wird. Der letztere wandelt den Lichtstrom in ein entsprechendes elektrisches Signal um, welches vom Verstärker 7 verstärkt wird. Ferner kommt das Signal am nichtinvertierenden Eingang 8 des logarithmischen Umwandlers 9 an. Im Augenblick der Schliessung des elektronischen Schalters 19 (Fig. 2) des Umwandlers 9 wird dieses Signal an den RC-Kreis 23 weitergegeben und lädt den Kondensator 24 auf eine Amplitude auf, die der Spannung $U_{IC}$ des analytischen Signals ($U_{IC} < U_{IA}$) (Fig. 4a, Abschnitt C) entspricht.

In den Pausen, während welcher der Schalter 19 getrennt ist und deren Dauer jeweils der Impulsfolgeperiode T entspricht, fällt die Spannung $U_{IC}$ nach dem Exponentialgesetz durch das Entladen des Kondensators 24 über den Widerstand 25 ab.

Die Zeit $\tau_C$ für die Entladung des Kondensators 24 auf die Spannung $U_{II}$ ist kürzer als die Impulsfolgeperiode T ($\tau_C < T$).

Dann werden die exponentialen Impulse $U_{IC}$ des RC-Kreises 23 mit der Spannung $U_{II}$ verglichen, die am Eingang 22 (Fig. 2) des Komparators 21 anliegt, welcher mit dem Ausgang des Inversintegrators 18 (Fig. 1) verbunden ist. Durch Vergleich der Spannungen $U_{IC}$ und $U_{II}$, die an die Eingänge 20 bzw. 22 des Komparators 21 angelegt sind, werden am Ausgang des logarithmischen Umwandlers 9 (Fig. 1) Impulse (Fig. 4b, Abschnitt C) gebildet, deren Dauer der Entladezeit $\tau_C$ des Kondensators 24 des RC-Kreises 23 von der Spannung $U_{IC}$ auf die Spannung $U_{II}$ entspricht. In diesem Fall ist die Entladezeit $\tau_C$ geringer als die Impulsfolgeperiode T, während die Differenz $t_c$ zwischen der Periode T und der Entladezeit des Kondensators 24 dem natürlichen Logarithmus der Amplitude des verstärkten Signals des Fotoempfängers 6 proportional ist, d.h. dem natürlichen Logarithmus von der Durchsichtigkeitsgrösse des zu analysierenden Gases bzw. dem Wert der optischen Dichte, wobei

$$t_n = R \cdot C \cdot \ln \cdot U_n$$

ist, worin mit

 R der Widerstandswert des Widerstandes 25 (in Ohm),
 C die Kapazität des Kondensators 24 (in F),
 U die Spannung eines jeweiligen n-ten Impulses (in V) bezeichnet sind.

Nach einer durchgeführten Serie von Messungen ist die Lage des Nullpegels zu überprüfen. Die Lage des Nullpegels wird aufgrund von Anzeigewerten der Registriereinheit 16 überwacht. Fand eine Abscheidung undurchsichtiger Bestandteile des zu analysierenden Gases an den optischen Elementen (Lichtstrahler 3 und aktive Oberfläche des Fotoempfängers 6) oder eine Drift der Parameter der optischen Elemente statt, wodurch eine Änderung des Ursprungssignals $U_{IA}$ auf den Wert $U_{ID}$ (Fig. 4a, Abschnitt D) hervorgerufen wurde, so geschieht eine Verschiebung des Nullpegels der Einrichtung. Dabei ist $\tau_D \neq \tau_B$ und am Ausgang des Summators 13 erscheint eine positive Spannung $U_{IVD}$ (Fig. 4d, Abschnitt D).

Um den Nullpegel am Ausgang des Summators 13 wiederherzustellen, ist der Schalter 17 zu schliessen, wobei mit dem positiven Potential $U_{IU}$, das auf den Eingang des Inversintegrators 18 gegeben wird, die Spannung am Speicherkondensator im Sinne einer Verminderung des Potentials geändert wird, was seinerseits zur Senkung der Spannung $U_{II}$ am Ausgang des Inversintegrators 18 oder am Eingang 10 des logarithmischen Umwandlers 9 so lange führt, bis die Gleichheit von $\tau_B = \tau_E$ wiederhergestellt wird, bei welcher das am invertierenden Eingang 12 des Summators 13 eintreffende integrierte Signal $U_{III}$ des Komparators 21 die dem nichtinvertierenden Eingang 14 des Summators 13 zugeführte Bezugsspannung $U_o$ kompensiert (Fig. 4c, Abschnitt E). Dabei ändert sich die Spannung $U_{II}$ am Ausgang des Integrators 18 nicht mehr, und die Schaltung der Einrichtung erreicht den Gleichgewichtszustand. An der Skala der Registriereinheit 16 wird der Nullpegel angezeigt.

Dann trennt man den Schalter 18, und die Einrichtung ist somit zum nächsten Messzyklus zur Messung der optischen Gasdichte vorbereitet und behält dabei die Ausgangsparameter (Empfindlichkeit, Nullpegel) bei.

Die in Fig. 3 dargestellte Einrichtung zur Messung der optischen Dichte von Gasen arbeitet analog, nur dass die zu erzeugenden Impulse vom Lichtstrahler 3 an den Steuereingang des Umschalters 28 übermittelt werden, an dessen Informationseingang ein vom Verstärker 27 verstärktes Signal des Wärmefühlers 26 angelegt wird. Also wird am Ausgang des Summators 14 eine Impulsfolge erzeugt, deren Impulsamplitude der Temperatur des zu analysierenden Gases und deren Impulsdauer der optischen Dichte des zu analysierenden Gases proportional sind. Die Registriereinheit 16 bildet einen Mittelwert der Amplitude der Impulsfolge ab, der dem Produkt aus der Temperatur des zu analysierenden Gases und der optischen Dichte dieses Gases proportional ist. Somit kennzeichnet das Messignal der Einrichtung die optische Dichte eines zu analysierenden Gases mit einem die Wärmeausdehnung des zu analysierenden Gases berücksichtigenden Korrekturfaktor.

Die Erfindung wird zur Bestimmung der Rauchdichte und des Staubgehaltes von Gasen, z.B. Abgasen bei Dieselfahrzeugen, verwendet.

Die Erfindung kann auch in der chemischen, metallurgischen oder der Brennstoffindustrie Anwendung finden, d.h. überall dort, wo die Überwachung der Verschmutzung mit undurchsichtigen Teilchen von Gasen erforderlich ist, die in die Atmosphäre abgeleitet werden.

**Patentansprüche**

1. Einrichtung zur Messung der optischen Dichte von Gasen, die ein Gehäuse (1) enthält, in dem auf einer optischen Achse (2) hintereinander ein Lichtstrahler (3), eine Messkammer (5), die für das Durchströmen zu analysierender Gase vorgerichtet ist, und ein Fotoempfänger (6) angeordnet sind, an dessen Ausgang eine Reihenschaltung eines Verstärkers (7) und eines logarithmischen Umwandlers (9), der einen zweiten Eingang aufweist, eine Registriereinheit (16), die mit dem Ausgang des logarithmischen Umwandlers (9) elektrisch verbunden ist, sowie eine Bezugsspannungsquelle (15) gelegt ist, dadurch **gekennzeichnet**, dass sie mit einer Hintereinanderschaltung aus einem Integrator (11), einem Summator (13), an dessen zweiten Eingang (14) die Bezugsspannungsquelle (15) angeschlossen ist, aus einem Schalter (17) und einem Inversintegrator (18), dessen Ausgang am zweiten Eingang (10) des logarithmischen Umwandlers (9) liegt, versehen ist, wobei der Eingang des Integrators (11) an den Ausgang des logarithmischen Umwandlers (9) angeschlossen ist und die Registriereinheit (16) mit dem Ausgang des Summators (13) in Verbindung steht.

2. Einrichtung nach Anspruch 1, dadurch **gekennzeichnet**, dass sie zusätzlich mit einem in der Messkammer (5) untergebrachten Wärmefühler (26), einem weiteren Verstärker (27) und einem Umschalter (28), der über zwei Eingänge- einen Steuer- und einen Informationseingang - verfügt, versehen ist, wobei der Ausgang des Wärmefühlers (26) über den Verstärker (27) an den Informationseingang des Umschalters (28) angeschlossen ist, der zwischen dem logarithmischen Umwandler (9) und dem Integrator (11) so geschaltet ist, dass der Steuereingang des Umschalters (28) mit dem Ausgang des logarithmischen Umwandlers (9) und der Ausgang des Umschalters (28) mit dem Eingang des Integrators (11) verbunden ist.

FIG.1

FIG.2

FIG.3

FIG.4

EP 0 462 278 A1

# INTERNATIONAL SEARCH REPORT

International Application No PCT/SU 90/00003

**I. CLASSIFICATION OF SUBJECT MATTER** (if several classification symbols apply, indicate all) [6]

According to International Patent Classification (IPC) or to both National Classification and IPC

IPC[5]:  G 01 N 21/53, G 01 J 1/44

**II. FIELDS SEARCHED**

Minimum Documentation Searched [7]

| Classification System | Classification Symbols |
|---|---|
| IPC[5]: | G 01 N 21/53, G 01 J 1/44 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 1413491 (Kharkovsky institut inzhenerov zheleznodorozhnogo transporta im. S.M. Kirova), 30 July 1988, the abstract, the drawing | 1,2 |
| A | GB, A, 2034028 (AMERICAN DISTRICT TELEGRAPH COMPANY) 29 May 1980, the abstract, figures 1,2 | 1,2 |
| A | EP, A2, 0135362 (COLE, MARTIN TERENCE), 27 March 1985 the abstract, figures 1,5 | 1,2 |
| A | SU, A1, 1520405 (E. D. Pembek), 7 November 1989, the abstract, the drawing | 1,2 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19 July 1990 (19.07.90) | 14 December 1990 (14.12.90) |

| International Searching Authority | Signature of Authorized Officer |
|---|---|
| ISA/SU | |